# EUROPÄISCHE PATENTSCHRIFT

(11) **EP 0 272 474 B1**
(45) Veröffentlichungstag und Bekanntmachung des Hinweises auf die Patenterteilung: **15.03.1995**
(21) Anmeldenummer: 87117277.1
(22) Anmeldetag: 24.11.1987
(51) Int. Cl.: H01M 10/00

(54) **Verfahren zum Herstellen eines Bleiakkumulators mit einem thixotropen Gel als Elektrolyt**
Method of making a lead storage battery having a thixotropic gel as electrolyte
Procédé de fabrication d'un accumulateur au plomb à électrolyte constitué par un gel thixotropique

(30) Priorität: 22.12.1986 DE 3644420
(43) Veröffentlichungstag der Anmeldung: 29.06.1988
(73) Patentinhaber: HAGEN Batterie AG, D-59494 Soest (DE)
(72) Erfinder: Nann, Eberhard, Dr., D-4770 Soest-Deiringsen (DE); Böhle, Christian, Dr., D-4770 Soest (DE)
(74) Vertreter: Lange, Gerd, Dipl.-Ing.

(56) Entgegenhaltungen:
- DE-A- 459 909
- DE-A- 2 210 125
- DE-A- 3 041 953
- FR-A- 2 309 048
- US-A- 3 839 089
- US-A- 3 930 881
- US-A- 4 687 718
- PATENT ABSTRACTS OF JAPAN, Band 12, Nr. 99 (E-594)[2946], 31. März 1988; & JP-A-62 229 666 (SHIN KOBE ELECTRIC MACH CO. LTD) 08-10-1987
- PATENT ABSTRACTS OF JAPAN, Band 12, Nr. 89 (E-592)[2936], 23. März 1988; & JP-A-62 223 989 (SHIN KOBE ELECTRIC MACH CO. LTD) 01-10-1987
- PATENT ABSTRACTS OF JAPAN, Band 6, Nr. 251 (E-147)[1129], 10. Dezember 1982; & JP-A-57 148 882 (MATSUSHITA DENKI SANGYO K.K.) 14-09-1982
- CHEMICAL ABSTRACTS, 58-12-1963, Spalten 12162h-1263a; M.F. SKALOZUBOV: "Lead batteries with unformed plates", & TR. NOVOCHERK. POLITEKHN. INST., 134, 99 108(1962)
- CHEMICAL ABSTRACTS, Band 83, Nr. 22, 1. Dezember 1975, Seite 185, Zusammenfassung Nr. 182033g, Columbus, Ohio, US; & JP-A-75 31 332 (ATSUMI MFG. CO., LTD) 27-03-1975

## Beschreibung

Die Erfindung betrifft ein Verfahren zum Herstellen eines Bleiakkumulators, dessen Betriebselektrolyt in Form eines thixotropen Gels in den Akkumulatorenzellen festgelegt ist.

Bleiakkumulatoren dieses Typs sind infolge der Festlegung des Betriebselektrolyten auslaufsicher und auch wartungsfrei. Problematisch ist jedoch die Einbringung des Gels in die Akkumulatorenzellen. Vorteilhaft wäre ein Gel, das bei der industriellen Fertigung von Bleibatterien bis nach der Einbringung in die Zellen eine ausreichend niedrige Viskosität beibehält, damit das Gel in alle Hohl- und Zwischenräume der fertiggebauten Akkumulatorenzellen gut einfließen kann. Erst danach sollte die Viskosität des Gels auf die für die Festlegung des Betriebselektrolyten gewünschte hohe Viskosität ansteigen.

Aus der DE-A 459 909 ist bekannt, die Hauptbestandteile eines Elektrolyten (Wasser und Schwefelsäure) getrennt voneinander in die Zellen einzubringen. Zunächst wird Schwefelsäure auf eletrochemischem Wege durch Tiefentladung der Elektrodenplatten in Form von Bleisulfat in den aktiven Massen der Elektrodenplatten gespeichert, woraufhin ggf. die Zellen auch mit einer Trockenfüllung, z.B. gallertartiger oder trockener Kieselsäure, versehen werden können. Erst später beim Endverbraucher wird in die Zellen destilliertes Wasser eingefüllt und die Batterie geladen, so daß die mit der Ladung wieder frei werdende Schwefelsäure mit dem Wasser den Betriebselektrolyten bildet. Damit beim Laden von Anfang an eine gewisse Leitfähigkeit gegeben ist, ist vorgeschlagen, vor dem Einfüllen des Wassers etwas Natriumsulfat in fester Form in die Zellen einzugeben.

Ein anderes Verfahren zum Einbringen eines gelförmig festgelegten Betriebselektrolyten in die Zellen eines Akkumulators beschreibt die DE-A 30 41 953 Dort wird vorgeschlagen, nur einen Teil der für die Endsäuredichte (von z.B. 1,27 bis 1,28 g/cm³) des späteren Betriebselektrolyten erforderliche Schwefelsäure auf elektrochemischem oder chemischem Wege als Bleisulfat in den aktiven Massen der Elektrodenplatten zu speichern. Der danach einzugebende Füllelektrolyt wird als Schwefelsäure-Gelbildner-Gemisch vorbereitet, wobei die Schwefelsäuredichte bevorzugt zwischen 1,05 und 1,08 g/cm³ liegen soll und ggf. der fertigen Mischung auch noch Phosphorsäure zugegeben werden kann, um die Zyklenfestigkeit der Batterie zu verbessern.

Gemäß der vorliegenden Erfindung wird das beschriebene Problem der industriellen, d.h. der in einer industriellen Serienfertigung praktikablen Einbringung eines thixotropen Gels in eine fertige Akkumulatorenzelle auf eine ganz andere Weise gelöst. Erstmals wird nicht von einem Schwefelsäure-Gelbildner-Gemisch als Füllelektrolyt ausgegangen, sondern von einem in die Akkumulatorenzellen einzufüllenden Wasser-Gelbildner-Gemisch, dem nach Maßgabe der Erfindung Phosphorsäure oder Natriumhydrogensulfat zugesetzt ist.

Gemäß Anspruch 1 wird zunächst in einem ersten Verfahrensschritt die gesamte Schwefelsäure, die zur Einstellung der Endsäuredichte des Betriebselektrolyten der gebrauchsfertigen Batterie erforderlich ist, als Bleisulfat in den aktiven Massen der positiven und negativen Platten gespeichert. Sodann wird in einem zweiten Verfahrensschritt ein Wasser-Gelbildner-Gemisch mit einem Wasserstoffionenbildner, bestehend aus 0,01 bis 10 Gew.-% Phosphorsäure, und mit 2 bis 18 Gew.-% pyrogenem Siliziumdioxid als Gelbildner, jeweils bezogen auf die Gesamtelektrolytmenge in der Zelle, in die fertiggebauten Akkumulatorenzellen eingefüllt. Dabei muß das einzufüllende Wasser-Gelbildner-Gemisch in der Weise hergestellt werden, daß dem Wasser grundsätzlich der Wasserstoffionenbildner oder Teilmengen davon vor dem Gelbildner zugemischt werden.

Gemäß Anspruch 2 ist vorgeschlagen, anstelle der Phosphorsäure dem Wasser-Gelbildner-Gemisch Natriumhydrogensulfat zuzusetzen, und zwar in der Größenordnung von 0,01 bis 30 g/l, vorzugsweise von 2 bis 15 g/l. Auch Natriumhydrogensulfat oder ein anderes analoges lösliches Salz ist geeignet, die notwendigen Wasserstoffionen zur Verbesserung der Ionenleitfähigkeit des Wasser-Gelbildner-Gemisches zu liefern.

Das Speichern der erforderlichen Schwefelsäuremenge in den Platten in Form von Bleisulfat kann entweder auf elektro-chemischen Wege (GB-A-1408547) oder auf chemischen Wege erfolgen, wie dies bekannt ist.

Bei dem chemischen Verfahren wird bevorzugt von den unformierten positiven und negativen Platten ausgegangen, die zu Plattensätzen zusammengestellt und in die Zellengefäße eingebaut werden. Daraufhin wird in die Zellengefäße unter Berücksichtigung der bereits bei der Herstellung der unformierten Massen eingebrachten Schwefelsäure zur Sulfatierung der aktiven Massen Schwefelsäure mit einer Anfangssäuredichte gleich oder größer als die gewünschte Endsäuredichte des späteren Betriebselektrolyten eingefüllt, wodurch sich in Abhängigkeit von der Zeit in den aktiven Massen Bleisulfat in der für die Endsäuredichte des Betriebselektrolyten erforderlichen Menge bildet. Anschließend wird der verbleibende Schwefelsäure-Rest aus den Zellengefäßen wieder entfernt, z.B. ausgekippt.

Nach dem Entfernen des Schwefelsäure-Restes aus den Zellengefäßen, wird gemäß der Erfindung das Wasser-Gelbildner-Gemisch in die Zellen eingefüllt und es erfolgt sodann die Erstladung (Formation).

Für die Formation können alle dem Fachmann bekannten Ladungsprogramme benutzt werden. Mit zunehmender Ladung wird die in den Platten in Form von Bleisulfat gespeicherte Schwefelsäure nach und nach freigegeben und diese bildet mit dem eingefüllten Wasser-Gelbildner-Gemisch einen Schwefelsäureelektrolyten mit steigender Säuredichte. Erst nach Erreichen einer Schwefelsäuredichte größer als z.B. 1,10 g/cm³ setzt bei Raumtemperatur mit z.B. 6 - 12 Gew.-% Siliziumdioxid als Gelbildner die Gelbildung verstärkt ein, so daß vorher, d.h. nach dem Einfüllen des Wasser-Gelbildner-Gemisches bis zum verstärkten Einsetzten der Gelbildung genügend Zeit verblieben ist, in der sich alle Hohl- und Zwischenräume des Plattensatzes vollständig mit dem gebildeten Schwefelsäureelektrolyten füllen können.

Die Menge der in Form von Bleisulfat in den Platten gespeicherten und für die Einstellung der Endsäuredichte des Betriebselektrolyten benötigten Schwefelsäure kann durch Wahl bestimmter Parameter genau bestimmt werden. Diese Parameter sind das durch die Konstruktion der Akkumulatorzelle festgelegte Verhältnis der unformierten aktiven Massen der Platten zu der für das Sulfatieren der aktiven Massen in die Zellengefäße eingefüllten Menge an Schwefelsäure, die Anfangssäuredichte der eingefüllten Schwefelsäure und die Temperatur und die Zeitdauer der Sulfatierung bis zum Entfernen des verbleibenden Schwefelsäure-Restes.

Für die industrielle Durchführung des erfindungsgemäßen Verfahren ist es wichtig, daß gemäß der Erfindung beim Anmischen des Wasser-Gelbildner-Gemisches mit den genannten Zusätzen grundsätzlich der Wasserstoffionenbildner oder Teilmengen davon vor dem Gelbildner zugemischt werden.

Die Einhaltung dieser Reihenfolge ist erforderlich, da andernfalls, z.B. bei der Zugabe des Gelbildners vor dem Wasserstoffionenbildner, sofort ein hochviskoses Gel entsteht, das die anschließende Zumischung von Phosphorsäure oder Natriumhydrogensulfat und das Einfüllen des Gemisches in die Zellengefäße unmöglich macht. Wird dagegen die als Erfindung beanspruchte Reihenfolge beachtet, dann entsteht ein Wasser-Gelbildner-Gemisch mit Zusätzen von Phosphorsäure oder Natriumhydrogensulfat, das eine relativ niedrige Viskosität aufweist und sich gut in die Zellengefäße einfüllen läßt.

Nachfolgend werden zwei Ausführungsbeispiele des erfindungsgemäßen Verfahrens beschrieben.

### Beispiel 1

In eine mit 5 negativen und 5 positiven unformierten Gitterplatten zusammengebaute 36 Ah-Zelle wurden 465 ml Schwefelsäure der Dichte 1,26 g/cm³ (20 °C) eingefüllt. Nach 7,5 h war die Säuredichte auf 1,07 g/cm³ (20 °C) abgesunken . Nun wurde die Schwefelsäure durch Auskippen aus dem Zellgefäß entfernt. Das Volumen der ausgekippten Schwefelsäure betrug 290 ml. Die in der Zelle zurückbleibende Sulfatmenge läß sich in 3 Gruppen einteilen. Zur 1. Gruppe gehört das Sulfat, das von vornherein in den unformierten Platten vorhanden war und welches durch den Sulfatgehalt der positiven und negativen Massemischungen bestimmt wird. Die 2. Gruppe enthält das gespeicherte Sulfat, welches durch die Sulfatierung nach dem Einfüllen der Schwefelsäure hinzugekommen ist und welches wie das Sulfat der 1. Gruppe als Bleisulfat in den Platten vorliegt. Zur 3. Gruppe gehört schließlich die gespeicherte Sulfatmenge, die in Form von Schwefelsäure in den Poren der Platten und der Separatoren vorliegt. Nach dem Auskippen der Schwefelsäure wurde in die Zelle ein Wasser-Gelbildner-Gemisch eingefüllt, das eine Zusammensetzung hatte, daß nach der Formation bezogen auf die Gesamtelektrolytmenge in der Zelle 6 % der auf pyrogenem Wege hergestellte Kieselsäure (z.B. Aerosil 200® der Fa. Degussa), 2 % Orthophosphorsäure und 3 g/l Natriumsulfat in der Zelle vorhanden waren. Unmittelbar nach dem Einfüllen des Wasser-Gelbildner-Gemisches begann die Formation. Durch die hierbei freiwerdende Schwefelsäure entstand zwischen den Platten ein Gel. Bei dem daran anschließenden Zyklentest wurde zunächst eine Kapazität von 90 % erreicht, die jedoch nach wenigen Zyklen auf 100 % anstieg.

### Beispiel 2

In eine mit 6 positiven Röhrchenplatten und 7 negativen Gitterplatten formierten 600-Ah-Zelle wurde die Säuredichte durch Zugabe von Schwefelsäure auf 1,31 g/cm³ (20 °C) erhöht und der Elektrolytstand so eingestellt, daß sich 9,0 l Schwefelsäure in der Zelle befanden. Danach wurde eine Entladung mit einem Strom von 7 A durchgeführt, bis die Säuredichte auf 1,08 g/cm³ (20 °C) abgesunken war. Anschließend wurde durch Auskippen der Elektrolyt aus dem Zellgefäß entfernt. Die in der Zelle verbleibende Menge Sulfat setzt sich zusammen aus der in dem Poren der Platten und der Separatoren zurückgehaltenen Schwefelsäure und dem durch die Entladung in den Platten entstandenen Bleisulfat. Es wurde sodann in die Zelle ein Wasser-Gelbildner-Gemisch eingefüllt, das als Gelbildner eine auf pyrogenem Wege hergestellte Kieselsäure, (z.B. Aerosil 200® der Fa. Degussa) sowie Natriumsulfat und Orthophosphorsäure enthielt. Die Rezeptur wurde so gewählt, daß bezogen auf die Gesamtelektrolytmenge in der Zelle, in der geladenen Zelle 6,5 % Kieselsäure, 2 % Orthophosphorsäure und 3 g/l Natriumsulfat in der Zelle vorhanden waren. Unmittelbar nach dem Einfüllen des Wasser-Gelbildner-Gemisches wurde die Zelle aufgeladen. Die dabei freiwerdende Schwefelsäure bewirkte die Ausbildung eines Gels zwischen den Platten. Bei dem anschließend durchgeführten Zyklentest wurde bereits in den ersten Zyklen eine Kapazität von über 100 % erreicht.

## Patentansprüche

1. Verfahren zur Herstellung eines Bleiakkumulators, dessen Betriebselektrolyt in Form eines thixotropen Gels in den Akkumulatorenzellen festgelegt ist,
- bei dem zunächst in einem ersten Verfahrensschritt die gesamte Schwefelsäure, die zur Einstellung der Endsäuredichte des Betriebselektrolyten der gebrauchsfertigen Batterie erforderlich ist, als Bleisulfat in den aktiven Massen der positiven und negativen Platten gespeichert wird,
- und sodann in einem zweiten Verfahrensschritt ein Wasser-Gelbildner-Gemisch mit einem Wasserstoffionenbildner, bestehend aus 0,01 bis 10 Gew.-% Phosphorsäure, und mit 2 bis 18 Gew.-% pyrogenem Siliziumdioxid als Gelbildner, jeweils bezogen auf die Gesamtelektrolytmenge in der Zelle, in die fertiggebauten Akkumulatorenzellen eingefüllt wird,
- wobei das einzufüllende Wasser-Gelbildner-Gemisch in der Weise hergestellt wird, daß dem Wasser grundsätzlich der Wasserstoffionenbildner oder Teilmengen davon vor dem Gelbildner zugemischt werden.

2. Verfahren zur Herstellung eines Bleiakkumulators, dessen Betriebselektrolyt in Form eines thixotropen Gels in den Akkumulatorenzellen festgelegt ist,
- bei dem zunächst in einem ersten Verfahrensschritt die gesamte Schwefelsäure, die zur Einstellung der Endsäuredichte des Betriebselektrolyten der gebrauchsfertigen Batterie erforderlich ist, als Bleisulfat in den aktiven Massen der positiven und negativen Platten gespeichert wird,
- und sodann in einem zweiten Verfahrensschritt ein Wasser-Gelbildner-Gemisch mit einem Wasserstoffionenbildner, bestehend aus 0,01 bis 30 g/l Natriumhydrogensulfat, und mit 2 bis 18 Gew.-% pyrogenem Siliziumdioxid als Gelbildner, bezogen auf die Gesamtelektrolytmenge in der Zelle, in die fertiggebauten Akkumulatorenzellen eingefüllt wird,
- wobei das einzufüllende Wasser-Gelbildner-Gemisch in der Weise hergestellt wird, daß dem Wasser grundsätzlich der Wasserstoffionenbildner oder Teilmengen davon vor dem Gelbildner zugemischt werden.

## Claims

1. Method of manufacturing a lead accumulator whose operational electrolyte is located in the accumulator cells in the form of a thixotropic gel,
- in which, in a first process step, the entire amount of sulphuric acid necessary to fix the final acid density of the operational electrolyte of the finished battery is stored as lead sulphate in the active masses of the positive and negative plates,
- and then, in a second process step, a water/gel former mixture with a hydrogen ion former, comprising 0.01 to 10% by weight of phosphoric acid, and with 2 to 18% by weight of pyrogenic silicon dioxide as a gel former, respectively relative to the overall amount of electrolyte in the cell, is poured into the finished accumulator cells,
- the water/gel former mixture to be poured in being so produced that the hydrogen ion former or partial amounts thereof is/are basically added to the water before the gel former.

2. Method of manufacturing a lead accumulator whose operational electrolyte is located in the accumulator cells in the form of a thixotropic gel,
- in which, in a first process step, the entire amount of sulphuric acid necessary to fix the final acid density of the operational electrolyte of the finished battery is stored as lead sulphate in the active masses of the positive and negative plates,
and then, in a second process step, a water/gel former mixture with a hydrogen ion former, comprising 0.01 to 30 g/l of sodium acid sulphate, and with 2 to 18% by weight of pyrogenic silicon dioxide as a gel former, respectively relative to the overall amount of electrolyte in the cell, is poured into the finished accumulator cells,
- the water/gel former mixture to be poured in being so produced that the hydrogen ion former or partial amounts thereof is/are basically added to the water before the gel former.

## Revendications

1. Procédé de fabrication d'un accumulateur au plomb dont l'électrolyte est présent sous forme d'un gel thixotrope dans les cellules de l'accumulateur, dans lequel:
tout d'abord, dans une première étape du procédé, tout l'acide sulfurique nécessaire pour obtenir la densité finale de l'acide de l'électrolyte de la batterie prête à l'utilisation est stocké sous forme de sulfate de plomb dans les masses actives des plaques positives et négatives
et, dans une deuxième étape du procédé on remplit les cellules déjà prêtes de l'accumulateur avec un mélange d'eau et d'agent de formation de gel avec un composant formant des ions d'hydrogène, se composant de 0,01 à 10% en poids d'acide phosphorique et de 2 à 18% en poids de dioxyde de silicium pyrogène comme agent de formation de gel, par rapport à la quantité totale d'électrolyte dans les cellules
dans lequel on fabrique le mélange de remplissage d'eau et d'agent de formation de gel servant au remplissage de sorte que l'on ajoute à l'eau, essentiellement le composant de formation d'ions d'hydrogène ou des quantités partielles de solution avant d'ajouter le composant de formation de gel.

2. Procédé de fabrication d'un accumulateur au plomb dont l'électrolyte est présent sous forme d'un gel thixotrope dans les cellules de l'accumulateur, dans lequel:
tout d'abord, dans une première étape du procédé, tout l'acide sulfurique nécessaire pour obtenir la densité finale de l'acide de l'électrolyte de la batterie prête à l'utilisation est stocké sous forme de sulfate de plomb dans les masses actives des plaques positives et négatives
et, dans une deuxième étape du procédé on remplit les cellules déjà prêtes de l'accumulateur avec un mélange d'eau et d'agent de formation de gel avec un composant formant des ions d'hydrogène composé de 0,01 à 30g/l de bisulfate de sodium et de 2 à 18% en poids de dioxyde de silicium pyrogène comme agent de formation de gel, par rapport à la quantité totale d'électrolyte dans les cellules
dans lequel on fabrique le mélange de remplissage d'eau et d'agent de formation de gel servant au remplissage de sorte que l'on ajoute à l'eau, essentiellement le composant de formation d'ions d'hydrogène ou des quantités partielles de solution avant d'ajouter le composant de formation de gel.
